# EUROPÄISCHE PATENTANMELDUNG

(11) **EP 1 431 773 A2**
(43) Veröffentlichungstag der Anmeldung: **23.06.2004**
(21) Anmeldenummer: 03104271.6
(22) Anmeldetag: 19.11.2003
(51) Int. Cl.: G01S 7/282, G01S 7/03, G01S 13/42, H01Q 3/26, H01Q 3/40, H01Q 25/00

(54) **Winkelscannendes Radarsystem**

(30) Priorität: 20.12.2002 DE 10259863
(71) Anmelder: ROBERT BOSCH GMBH, 70442 Stuttgart (DE)
(72) Erfinder: Schoeberl, Thomas, 31139 Hildesheim (DE); Focke, Thomas, 31180 Ahrbergen (DE); Mansen, Dirk, 31139 Hildesheim (DE)

(57) **Zusammenfassung**

Bei einem winkelscannenden Radarsystem ist eine Gruppenantenne (1) vorgesehen, die über ein Strahlformungsnetzwerk (2) angesteuert wird. Eine Koppeleinrichtung (7) ermöglicht den Betrieb der Gruppenantenne sowohl für Sende- als auch für Empfangsrichtung. Über eine Einrichtung zur Mischung (8) von Radar-Empfangssignalen mit Radar-Sendesignalen ist eine digitale Auswertung des abgemischten Basisbandssignals bezüglich der Raumwinkelinformation möglich.

## Beschreibung

### Stand der Technik

Radarsysteme für Kraftfahrzeuganwendungen insbesondere Fahrerassistenz-Systeme wie z.B. ACC (Automatic Cruise Control) - Systeme, die auf dem Radarprinzip beruhen benötigen für die Auswertung ein richtungsaufgelöstes Abbild der Fahrzeugumgebung (Entfernungs-/Winkelinformation). Aktuelle Systeme arbeiten bei der Winkelbestimmung mit Monopulsverfahren, die auf einem Amplituden- und Phasevergleich mehrerer Empfangsrichtcharakteristiken beruhen. Diese Verfahren erzielen eine ausreichende Auflösung in einem relativ schmalen Sichtbereich, solange sich nur ein Ziel in einer Entfernungs-/Geschwindigkeitszelle befindet. Befinden sich mehrere Ziele in einer Zelle, ergeben sich unter Umständen falsche Winkel.

Aus der WO 02/15334A1 ist ein Mehrfachstrahl-Antennen-System bekannt mit einer Mehrzahl von Strahlerelementen, die an ein Strahlformnetzwerk, welches als Butler-Matrix ausgebildet ist, angekoppelt sind. Die Butler-Matrix ist an ein schaltbares Strahlkombinationsnetzwerk angeschlossen. Für Sende -und Empfangsrichtung werden dort Antennenpaare verwendet, deren Strahlungscharakteristiken parallel gesteuert werden, um zu gewährleisten, dass sie in die gleiche Richtung weisen.

Aus der DE 19644686A1 ist eine Anordnung zu Kalibrierung eines Senders und/oder Empfängers für die Ansteuerung eines Strahlformnetzes bekannt. Dadurch wird die Einstellung einer gleichen Strahlcharakteristik für Sende- und Empfangsbetrieb ermöglicht, ohne das hochgenaue Sender oder Empfänger nötig sind. Aus der US 5.682.165 ist ein automatisches Kalibriersystem für Radaranwendungen bekannt.

Aus der WO 01/09975A2 ist ein Radarsensor bekannt mit einer Rotmanlinse und Gruppenantenne. Eine Steuerschaltung ist als Sende- und Empfangsmodul ausgebildet.

Für verschiedene Winkelabschnitte können separate Empfindlichkeiten eingestellt werden, um Objekte winkelaufgelöst zu erfassen. Darüber hinaus können Abstände und Geschwindigkeiten insbesondere zu vorausfahrenden Fahrzeugen bestimmt werden. Die Auswertung erfolgt digital.

### Vorteile der Erfindung

Mit den Merkmalen gemäß Anspruch 1, das heißt mit einem analogen Strahlformnetzwerk, einer Gruppenantenne mit einer Mehrzahl von Strahlerelementen, einer Koppeleinrichtung zum Betrieb der Gruppenantenne sowohl für Sende- als auch Empfangsrichtung und mit einer Einrichtung zur Mischung von Radar - Empfangssignalen zur insbesondere digitalen Auswertung der Raumwinkelinformation anhand des abgemischten Basisbandssignals, lässt sich eine hohe Flexibilität bei der räumlichen Filterung von Radarechos erreichen. Insbesondere ist eine Mehrzielfähigkeit innerhalb einer Entfernungszelle gegeben. Auch lässt sich ein größerer Sichtbereich abdecken. Das abgemischte Basisbandsignal kann zur Weiterverarbeitung einfach digital abgetastet und digital ausgewertet werden.

In den Unteransprüchen werden vorteilhafte Weiterbildungen bzw. eine Verwendung aufgezeigt.

Das Strahlformnetzwerk kann aus einer HF-Struktur zur Aufteilung eines Oszillator-Sendesignals auf N-Pfade mit entsprechender Phasen- und /oder Amplitudengewichtung bestehen. Damit lässt sich eine Vielzahl von Richtcharakteristiken erzielen.

Über eine separate Umschalteinrichtung zur Änderung der Antennencharakteristik bezüglich ihrer Winkelbreite lassen sich Radarechos sowohl im Fembereich als auch im Nahbereich zuverlässig Objekten zuordnen. Diese Umschalteinrichtung kann vorteilhaft aus Mikroelektromechanischen Schaltern oder PIN- Diodenschaltern bestehen. Die Umschaltung kann vorteilhaft adaptiv oder eigengeschwindigkeitsabhängig ausgestaltet sein.

Die durch das Strahlformnetzwerk eingebrachten Phasenund/Amplitudenbeeinflussungen lassen sich auf einfache Weise herauskalibrieren.

Als Strahlformnetzwerk kann vorteilhaft eine Rotman-Linse oder Butler-Matrix vorgesehen sein. Das Radarsystem nach der Erfindung eignet sich für Kraftfahrzeug-Radaranwendungen. Durch einfaches Umschalten kann ein ACC-System oder ein Stop/and Go- System eingerichtet werden.

### Zeichnungen

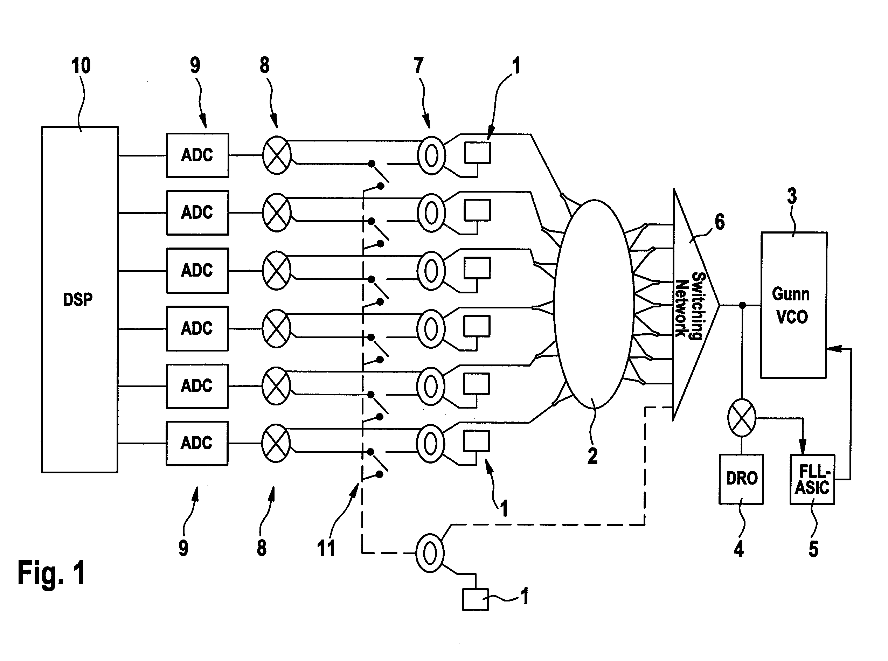

Die Erfindung wird anhand eines Ausführungsbeispiels gemäß Figur 1, die ein Blockschaltbild eines erfindungsgemäßen Radarsystems zeigt, näher erläutert.

### Beschreibung von Ausführungsbeispielen

Bei dem Radarsystem nach der Erfindung erfolgt gleichzeitig in Sende- und Empfangsrichtung eine Strahlformung bzw. Auswertung einer Rauminformation. Wie Figur 1 zeigt, wird beim Radarsystem nach der Erfindung eine Gruppenantenne mit N Strahlerelementen 1, hier speziell N Spalten, benutzt. Der nachfolgenden Beschreibung liegt ein Radar-FMCW-Prinzip als möglich Ausführungsform zu Grunde. Das erfindungsgemäße Radarsystem ist auch auf andere Prinzipien, z.B. Pulsradar übertragbar.

Kernstück der Strahlformung in Senderichtung ist eine analoge HF-Struktur als Strahlformnetzwerk 2, beispielsweise in Form einer Butler-Matrix, Rotman-Linse, eines Phasenschiebernetzwerks. Das beispielsweise mittels eines "Gunn-VCO 3 mit Trägeroszillator DRO 4 und FLL (frequency lock loop)-ASIC 5" aufbereitete "eindimensionale" FMCW Sendesignal wird über ein Schaltnetzwerk 6 auf den Eingang des analogen Strahlformungsnetzwerkes gegeben. Das Schaltnetzwerk 6 kann beispielsweise durch MEMS (mikroelektromechanische Schalter)realisiert werden. Die Wahl des Eingangs entscheidet über die Richtcharakteristik in Senderichtung. Die genaue Form der Antennencharakteristik wird durch das Design des Strahlformnetzwerkes 2 bzw. dessen Struktur bestimmt. Da bei diesen Strahlformungs- Strukturen jedem Eingang genau eine Antennencharakteristik zugeordnet ist, ergeben sich bei M Eingängen M verschiedene Charakteristiken. Das heißt, sendeseitig wird der zu scannende Raumwinkel nur sehr grob gerastert ausgeleuchtet. Die Anzahl der Ausgänge der Strahlform-Struktur 2 ist identisch mit der Anzahl N der Antennenelemente 1.

Durch Auswahl eines geschickten Netzwerkes kann mit der gleichen Antenne sowohl gesendet auch empfangen werden. Die Auftrennung in Sende- und Empfangspfad erfolgt hierbei jeweils mit einer Koppeleinrichtung, z.B. einem sogenannten Koppel- Hybrid. Zusätzlich kann im Schaltnetzwerk 6 umgeschaltet werden zwischen der zuvor beschriebenen Strahlformung und einer sehr breiten Abstrahlung durch nur eine oder zwei Antennenspalten. Das Sendesignal läuft dann nicht durch die Rotman-Linse (Butler-Matrix, .....). Es muss für diesen Betriebszustand das Sendesignal den Mischern 8, die für den Empfangspfad notwendig sind, gesondert zugeführt werden (gestrichelter Signalpfad in Figur 1 ). Hierzu ist eine separate Umschalteinrichtung 11, z.B. bestehend aus MEMS nötig.

Das N-dimensionale Empfangssignal wird empfangsseitig über die Koppeleinrichtung 7 ausgekoppelt, genau wie das Oszillatorsignal, welches an dieser Stelle allerdings bedingt durch das Strahlformnetzwerk 2 (Rotman-Linse,....) phasengewichtet ist. Diese Phasenund Amplitudengewichtung ist bekannt und kann bei der Signalverarbeitung wieder korrigiert (herauskalibriert) werden (vergleiche beispielsweise DE 19644686A1). Empfangssignal und Sendesignal werden einer Einrichtung zur Mischung bzw. jeweils einen Mischer 8 für jeden der N- Pfande zugeführt, und entsprechend ins Basisband gemischt. Das resultierende Signal wird mittels AD-Wandlern 9 abgetastet/ gescannt und kann durch digitale Signalverarbeitung 10 ausgewertet werden. Entsprechende Auswertealgorithmen zur Gewinnung der Raumwinkel-/oder Amplitudeninformation von Zielen sind an sich bekannt und werden hier nicht weiter erläutert.

Wesentlicher Punkt der Erfindung ist die günstigere Realisierung eines analogen Strahlformungsnetzwerkes in Senderichtung kombiniert mit einer digitalen Verarbeitung der empfangenen Radarsensorsignale. Sowohl in Senderichtung als auch in Empfangsrichtung wird die gleiche Antenne verwendet. Diese Kombination bietet eine hohe Flexibilität bei der räumlichen Filterung der Radarechos. Damit ist die Mehrzielfähigkeit innerhalb einer Entfernungszelle gemeint. Ein weiterer wichtiger Punkt ist die Möglichkeit der Umschaltung von einer stark gerichteten Sendecharakteristik für eine Detektion in weit entfernten Bereichen zu einer sehr breiten Sendecharakteristik für den Nahbereich. Diese Umschaltung kann beispielsweise eigengeschwindigkeitsabhängig oder adaptiv erfolgen.

## Patentansprüche

1. Winkelscannendes Radarsystem mit folgenden Merkmalen:
- einem analogen Strahlformungsnetzwerk (2) in Senderichtung,
- einer Gruppenantenne mit einer Mehrzahl von Strahlerelementen (1),
- einer Koppeleinrichtung (7) zum Betrieb der Gruppenantenne sowohl für Sende- als auch für Empfangsrichtung,
- einer Einrichtung zur Mischung (8) von Radar-Empfangsignalen mit den Radar-Sendesignalen zur insbesondere digitalen Auswertung (10) zumindest der Raumwinkelinformation anhand eines abgemischten Basisbandsignals.

2. Radarsystem nach Anspruch 1 **gekennzeichnet durch** eine HF-Struktur als Strahlformungsnetzwerks (2) zur Aufteilung eines Oszillator-Sendesignals auf N-Pfade mit entsprechender Phasen-/Amplitudengewichtung.

3. Radarsystem nach Anspruch 1 oder 2 **gekennzeichnet durch** eine Umschalteinrichtung (9) zur Änderung der Antennencharakteristik insbesondere bezüglich ihrer Winkelbreite, wie beispielsweise einer Umschaltung von einer starkbündelnden Richtcharakteristik für den Fembereich und einer breiten Abstrahlung für den Nahbereich.

4. Radarsystem nach Anspruch 3, **dadurch gekennzeichnet, dass** die Umschalteinrichtung (9) aus mikroelektromechanischen Schaltern oder PIN-Diodenschaltem besteht, die insbesondere in den N-Pfaden des aufgeteilten Oszillator-Sendesignals vorgesehen sind.

5. Radarsystem nach einem der Ansprüchen 1 bis 4 **gekennzeichnet durch** eine räumliche Filterung der Radarechos im Sinne einer Mehrzielfähigkeit innerhalb einer Empfangszelle.

6. Radarsystem nach einem der Ansprüche 3 bis 5, **dadurch gekennzeichnet, dass** die Winkelbreitenumschaltung adaptiv oder eigengeschwindigkeitsabhängig steuerbar ist.

7. Radarsystem nach einem der Ansprüche 1 bis 6 **gekennzeichnet durch** eine derartige Ausgestaltung, dass die **durch** das Strahlformungsnetzwerk (2) eingebrachten Phasen/Amplitudenbeeinflussungen herauskalibrierbar sind.

8. Radarsystem nach einem der Ansprüche 1 bis 7 **gekennzeichnet durch** Ausgestaltung des Strahlformungsnetzwerkes (2) in Form einer Rotman-Linse oder Butler-Matrix

9. Radarsystem nach einem der Ansprüche 1 bis 8 zur Verwendung in Kraftfahrzeugsanwendungen insbesondere in ACC (automatic cruise control)-Systemen oder Stop/ and Go - Systemen.
